# EUROPÄISCHE PATENTSCHRIFT

(11) **EP 0 297 513 B1**
(45) Veröffentlichungstag und Bekanntmachung des Hinweises auf die Patenterteilung: **25.08.1993**
(21) Anmeldenummer: 88110307.1
(22) Anmeldetag: 28.06.1988
(51) Int. Cl.: G21C 9/00, G21C 15/18

(54) **Sicherheitseinrichtung in einem Speichertank für eine Notkühlanlage eines Kernkraftwerks**
Security device in a storage vessel for an emergency cooling installation of a nuclear power plant
Dispositif de sécurité dans un réservoir pour l'installation de refroidissement de secours d'une centrale nucléaire

(30) Priorität: 29.06.1987 CH 2468/87
(43) Veröffentlichungstag der Anmeldung: 04.01.1989
(73) Patentinhaber: SIEMENS AKTIENGESELLSCHAFT, 80333 München (DE)
(72) Erfinder: Mackert, Pius, Dipl.-Ing., D-8520 Erlangen (DE); Held, Fritz, Prof. Dr., CH-8127 Forth (CH); Pletka, Jan, Chem.-Ing., CH-9100 Herisau (CH); Knaus, Hans-Jürgen, Dipl.-Ing., CH-9100 Herisau (CH)

(56) Entgegenhaltungen:
- DE-A- 3 533 016
- FR-A- 2 488 948
- GB-A- 1 337 792
- GB-A- 2 057 587

## Beschreibung

Die Erfindung bezieht sich auf einen Druckspeichertank zum Einspeisen einer Kühlflüssigkeit in einen Kernreaktor im Notkühlfall, mit den folgenden Merkmalen:
a) Der Speichertank weist eine - vorzugsweise obere - Einstiegsöffnung und einen - vorzugsweise unteren - steuerbaren Auslaß für die Kühlflüssigkeit auf;
b) durch eine im Inneren des Speichertanks angeordnete deformierbare Membrane sind ein mit Treibgas füllbarer Raum und ein Raum zur Speicherung von Kühlflüssigkeit hermetisch voneinander getrennt.

In Kernkraftwerken dienen solche Speichertanks dazu, in einem Störfall innerhalb kurzer Zeit die erforderliche Menge Kühlflüssigkeit zur Verfügung zu stellen. Die Kühlflüssigkeit ist voll entsalztes Wasser (Deionat) mit einem geringen Anteil von Borsäure. Als Treibgas wird Stickstoff oder Luft verwendet. Im Normalzustand beträgt der Umgebungsdruck 0 bar und die Umgebungsluft etwa 30° C. Im Störfall, d.h. kurz vor der Entspeicherung der Speichertanks, kann die Umgebungstemperatur jedoch bis auf 150° C und der Umgebungsdruck bis auf 2 bar steigen. Zudem ist durch die Einwirkung radioaktiver Strahlung mit einer Gesamtdosis von 10⁴ Gy über 40 Jahre zu rechnen.

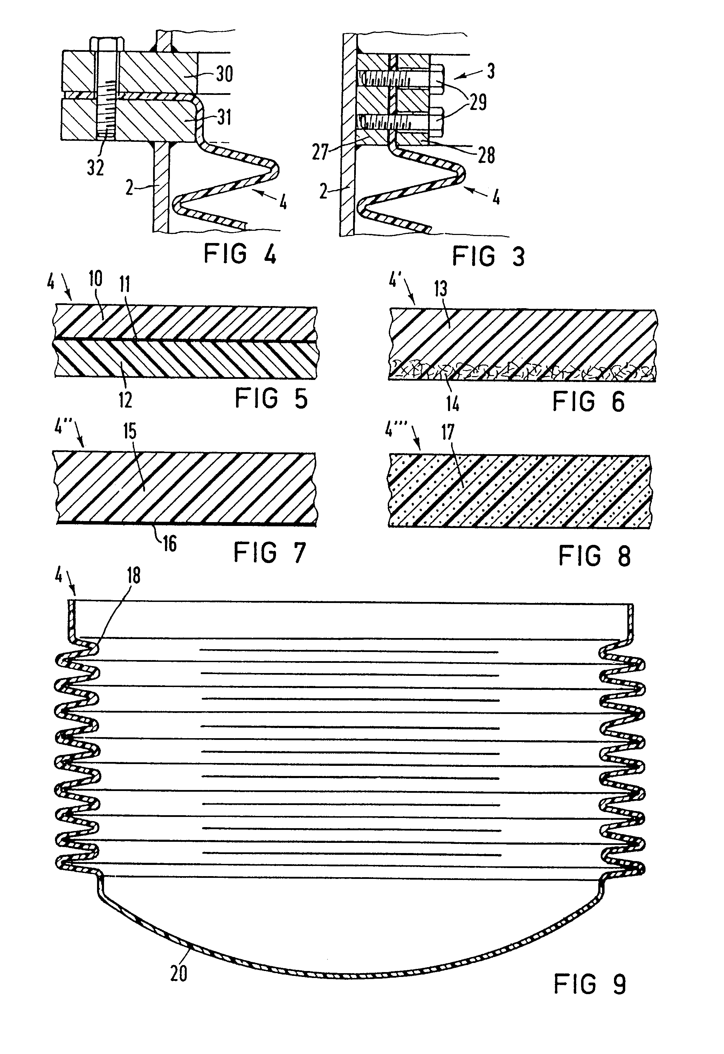

Weitere Einzelheiten ergeben sich aus dem Buch "VGB-Kernkraftwerksseminar 1970", S. 42, insbesondere aus Abb. 3, wonach solche Druckspeichertanks dazu benutzt werden, den Reaktorkern des Kernreaktors auch im Falle eines Bruchs im Hauptkühlsystem mit dem zur Kühlung notwendigen Wasser bedeckt zu halten. Das dabei eingespeiste Volumen beträgt z.B. bis zu 34 m³ je Druckspeichertank. Nach dem Einspeisen der Wasservorlage muß verhindert werden, daß das im Speichertank vorhandene Treibgas in den Kernreaktor gelangt und dort die Wärmeabfuhr beeinträchtigt. Deshalb wird die Entspeicherung bzw. Absperrung von zeit- und füllstandsabhängigen Reaktorschutzsignalen über Ventile gesteuert. Dadurch soll sichergestellt werden, daß das betreffende Ventil bei teilweiser oder vollständiger Entspeicherung rechtzeitig geschlossen wird und kein Treibgas in das Kühlsystem gelangen kann. Die rechtzeitige Ventilansteuerung und -betätigung -das Ventil muß, je nach Betriebsbedingung, immer "sicher" offen oder "sicher" geschlossen - erfordert einen hohen Aufwand an sicherheitsrelevanten Maßnahmen.

Durch die DE-A1-35 33 016 ist bereits ein Druckspeichertank nach dem Oberbegriff des Anspruchs 1 bekannt, bei welchem der hohe Aufwand sicherheitsrelevanter Maßnahmen zur Ventilbetätigung dadurch vermieden ist, daß an dem Rand der Auslaßöffnung eine Membran befestigt ist, welche die Auslaßöffnung gasdicht überdeckt, wobei die dem Rand der Auslaßöffnung abgekehrte Seite der Membran an einer Stützkonstruktion befestigt ist, die symmetrisch zur Auslaßöffnung ausgebildet ist.

Der kommerzielle Einsatz eines solchen bekannten Speichertanks würde jedoch einige Probleme mit sich bringen: Der Abfluß des Wassers erfolgt über eine relativ kleine Öffnung in einem siebförmigen Rotationskörper, welche durch die Membrane unter bestimmten Voraussetzungen blockiert werden könnte. Eine Installation der Membrane durch das Mannloch hindurch ist zwar vorab bei Sanierungen oder Nachrüstungen möglich, aber die Notwendigkeit einer Stützvorrichtung für die Membrane und die am oberen und unteren Ende der Stützvorrichtung angeordneten siebförmigen Teller erbringen zusätzliche Erschwernisse und vermindern die Funktionstüchtigkeit. Eine gesicherte Selbstzentrierung der Membrane ist im Falle der Entleerung der Wasservorlage nicht vollumfänglich gegeben. Weiterhin erfordert diese bekannte Konstruktion die Verwendung einer teueren, armierten Folie für die Membran, welche in strahlenbelasteter Atmosphäre gewisse Tendenzen der Separation des Werkstoffes vom Trägermaterial aufweisen kann. Zeiträume von bis zu 40 Jahren Funktionstüchtigkeit sind für solche Materialien nicht erprobt und nicht zu garantieren. Schließlich bringt es die Verstärkung im Membranmaterial mit sich, daß dessen Dehnungsfähigkeit nur minimal ist, so daß die Gefahr von Rissen, insbesondere in der Membranbefestigung, besteht.

Der Erfindung liegt die Aufgabe zugrunde, ausgehend von dem gattungsgemäßen Druckspeichertank, diesen so auszubilden, daß die dem bekannten Speichertank anhaftenden Probleme eliminiert und die Funktionssicherheit sowie der fertigungs- und montagegerechte Aufbau des Speichertanks verbessert werden können. Insbesondere soll der Auslaßquerschnitt nicht durch Stützkonstruktionen vermindert sein, diese sollen vielmehr weitgehend entfallen. Die Selbstzentrierung der Membrane im Entleerungsfalle soll gegeben sein, und die Membrankonstruktion soll die Verwendung teuerer armierter Folien erübrigen.

Erfindungsgemäß wird die gestellte Aufgabe dadurch gelöst,
c1) daß die Membrane als Faltenbalg-Membrane ausgebildet ist und bis zur praktisch vollständigen Abgabe der Kühlflüssigkeit dehnbar bzw. zum Wiederauffüllen des Raums mit Kühlflüssigkeit komprimierbar sowie mit dem Rand des einen Endes so befestigt ist, daß der Faltenbalg zur Tankwandung Spiel hat, und
c2) daß die Faltenbalg-Membrane an ihrem freien Ende eine Kalotte aufweist, mit einer solchen Verformbarkeit, daß die Faltenbalg-Membrane einschließlich ihrer Kalotte zwecks Einbaus durch die Einstiegsöffnung einführbar ist.

Vorteilhafte Weiterbildungen des Druckspeichertanks nach der Erfindung sind in den Patentansprüchen 2 bis 15 angegeben.

Die mit der Erfindung erzielbaren Vorteile sind vor allem darin zu sehen, daß für die Membrane bewährte und auch langfristig erprobte, unverstärkte Materialien verwendet werden können, von denen bevorzugte Ausführungsformen in den Patentansprüchen 9 bis 15 angegeben sind. Die Prüfbarkeit der Membrane ist vereinfacht, und aufgrund einer sehr einfachen Funktionsweise ist auch die Funktionssicherheit wesentlich verbessert. Im Ruhezustand ist die Membrane nur geringer Belastung ausgesetzt, währen sie beim bekannten Druckspeicher an der Behälterwand den Wasserdruck aushalten muß. Die isolierende Wirkung der Membran bzw. Gummimembrane auf den größten Teil der Behälterwand verhindert eine allzu rasche Abkühlung des Speichertanks im Falle der Gasentspannung. Im entspannten Zustand befindet sich die Membrane, bedingt durch das Anliegen an der Behälterwand, in stabiler Lage. Die Dehnbarkeit der Membran ist durch die ziehharmonika-ähnliche Faltenbalgausbildung in konstruktiv einfacher Weise realisiert, und aufgrund der Ausbildung nach Patentanspruch 4 ist die im Speichertank verbleibende Restwassermenge sehr gering. Die dichtende Anlage im Randbereich der Auslaßöffnung ergibt eine zusätzliche Abdichtung gegen unerwünschtes Eindringen von Treibgas in den Kühlwasserkreislauf.

Die Befestigungsart nach Patentansprüchen 2 und 6 ist insbesondere für eine Nachrüstung geeignet, wogegen die nach Patentanspruch 3 insbesondere bei neu zu fertigenden Speichertanks vorgesehen werden kann. Durch die Kalottenform der Membrane ist ein solches beschädigungsfreies "Zusammenknautschen" möglich, daß die Membrane durch das Mannloch hindurch in den Speichertank eingebracht bzw. aus diesem herausgenommen werden kann; dabei ist die an die Behälter-Bodenkalotte angepaßte Kalottenform der Membrane einerseits wegen der Abdichtung der Auslaßöffnung im entspannten Zustand, andererseits wegen der Abstützung der Membran-Kalotte am Boden des Speichertanks besonders vorteilhaft (Patentanspruch 5).

Der für die Funktionssicherheit wichtige Gegenstand des Patentanspruchs 7 wird durch den Gegenstand des Patentanspruchs 8 insofern weitergebildet, als ein absperrbares Rückschlagventil in bestimmten Betriebsfällen, z.B. bei abgefahrener Anlage oder bei Prüfungsarbeiten am Speichertank wichtig ist.

Durch die Ausbildung nach Patentanspruch 9 ist es möglich, die Membran aus unterschiedlichen Werkstoffen herzustellen, wobei diese Werkstoffe jeweils an die angrenzenden Medien angepasst werden können. Durch die Entspannung des Treibgases sinkt die Temperatur der Membran insbesondere auf der Seite des Treibgases sehr stark. Der Temperatursturz kann hierbei etwa 80° C betragen. Eine gute Dichtigkeit der Membran und genügende Festigkeit wird dann erreicht, wenn gemäß Patentanspruch 10 als Werkstoffe ein bei tiefen Temperaturen flexibler Kautschuk, z.B. Silikon- oder Fluorkautschuk und EPDM-oder Butylkautschuk verwendet werden. Es eignen sich auch Membranen, die auf der Seite der Kühlflüssigkeit vernetzt oder lackiert sind. Gemäß Patentanspruch 13 werden Undichtigkeiten der Membran dadurch vermieden, daß sie aus einem weichgemachten Polymer besteht. Ausführungsbeispiele der Erfindung werden nachfolgend anhand der Zeichnung näher erläutert. Es zeigen:
Fig. 1 einen Querschnitt durch einen Speichertank mit einer Faltenbalg-Membrane im gefalteten Zustand,
Fig. 2 entsprechend Fig. 1, jedoch nach vollständiger Entspeicherung,
Fig. 3 und 4 Schnitte durch Befestigungseinrichtungen für die Membran,
Fig. 5 bis 8 Teilquerschnitte durch unterschiedliche Ausbildungen der Membran, und
Fig. 9 einen Querschnitt durch Faltenbalg und Kalotte der Membrane im zusammengefalteten Zustand entsprechend Figur 1.

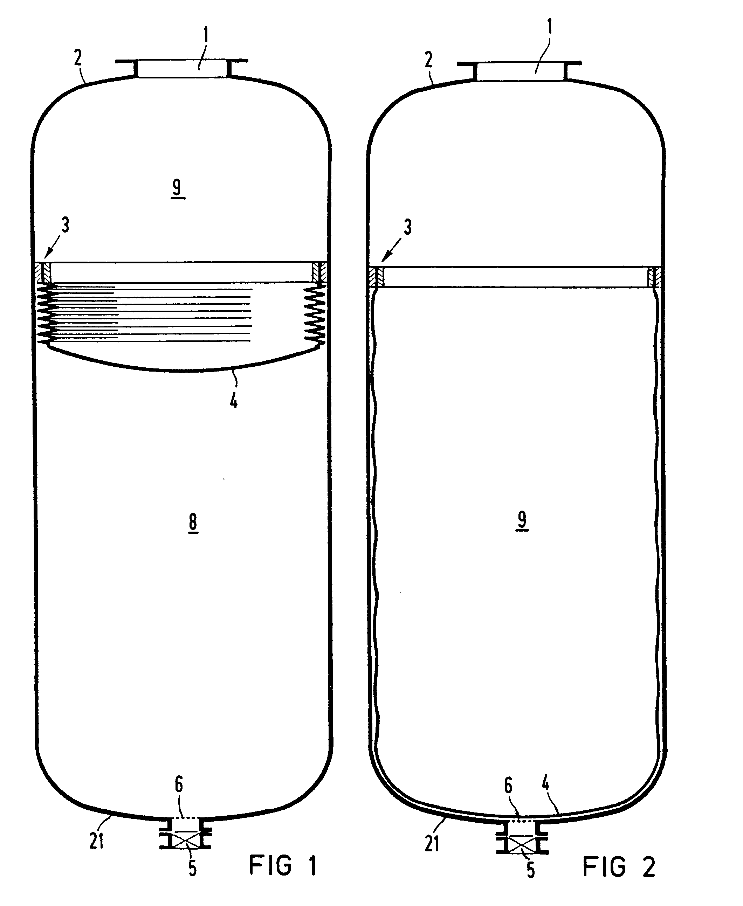

Wie die Fig. 1 und 2 zeigen, weist der im Querschnitt zylindrische Speichertank oben eine Einstiegsöffnung 1 (Mannloch) auf. In der gewölbten Bodenwandung 21 ist ein Auslaß 6 mit einer Schikane und einem Rückschlagventil 5 angebracht. Auf der Innenseite der Tankwandung 2 ist mittels einer Befestigungseinrichtung 3 eine Membran 4 angebracht, welche den Innenraum des Speichertanks gas- und flüssigkeitsdicht in einen Raum 9 für ein Treibgas und einen Raum 8 für eine Kühlflüssigkeit unterteilt. Bei dem in Fig. 1 gezeigten stationären Zustand besteht im Treibgas und in der Kühlflüssigkeit jeweils ein Druck von etwa 26 bar. Mit dem im Auslaß 6 bzw. in einer entsprechenden Auslaßleitung angeordneten Rückschlagventil 5 wird eine Rückströmung in den Speichertank verhindert. Das Rückschlagventil 5 ist absperrbar, was beispielsweise bei Prüfungsarbeiten wichtig ist. Aus Gründen der Vereinfachung ist der Mannlochdeckel nicht dargestellt, ebenso nicht eine in den Treibgasraum 9 über ein Ventil mündende Treibgasleitung.

Die Membran 4 besteht gemäß Fig. 9 aus einem Faltenbalg 18 mit Kalotte 20. Beide Teile können getrennt gefertigt und hernach gas- und flüssigkeitsdicht miteinander verbunden werden. Der Faltenbalg 18 weist soviele Falten auf, daß im entfalteten Zustand die Kalotte 20 in der tiefsten Zone der Bodenwandung 21 anliegt.

In einem Störfall wird die Kühlflüssigkeit unter der Wirkung des Treibgases durch den Auslaß 6 ausgedrückt, wobei sich der Faltenbalg 18 entfaltet. Bei einer vollständigen Entleerung des Speichertanks liegt am Ende der in Fig. 2 dargestellte Zustand vor. Hier ist die Membran 4 vollständig entfaltet und die Kalotte 20 liegt dicht in der tiefsten Zone auf der Innenseite an der Bodenwandung 21 an. Die Öffnung des Auslasses 6 wird hierbei durch die dicht anliegende Membran 4 verschlossen. Da sich die Membran 4 weitgehend an die Tankwandung 2 anschmiegt, ist die Restwassermenge klein.

Wie in Fig. 3 gezeigt, ist die Membran 4 zwischen einen Distanzring 27 und einen Befestigungsring 28 geklemmt. Der Distanzring 27 ist an der Tankwandung 2 angeschweißt und der Befestigungsring 28 mittels Schrauben 29 auf dem Distanzring 27 aufgeschraubt. Die Membran kann auch gemäß Fig. 4 zwischen zwei umlaufende Flansche 30 und 31 geklemmt sein, die an Teilen der Tankwandung 2 angeschweißt sind und mittels Schrauben 32 miteinander verbunden sind. Der Distanzring 27 gewährleistet, daß sich der Faltenbalg 18 bei einer Entspeicherung frei bewegen kann. Die Membran 4 ist über den ganzen Umfang der Ringe 27 und 28 geklemmt, so daß eine gas- und flüssigkeitsdichte Verbindung gegeben ist.

Wie die Fig. 5 bis 8 zeigen, kann die Membran aus einer oder mehreren Schichten bestehen. Vorzugsweise besteht die Membran gemäß Fig. 5 aus zwei Schichten 10 und 12, die durch Vulkanisation oder mittels einer Klebschicht 11 miteinander verbunden sind. Die dem Treibgas zugewandete Schicht 10 besteht vorzugsweise aus einem bei tiefen Temperaturen flexiblen Kautschuk, z.B. Silikon- oder Fluorkautschuk und die der Kühlflüssigkeit zugewandte Schicht 12 aus einem gasdichten Kautschuk, z.B. EPDM- oder Butylkautschuk. Es hat sich gezeigt, daß diese Membran bei der Entspeicherung auch dann nicht undicht wird, wenn diese sehr schnell stark unterkühlt wird. Die in Fig. 6 dargestellte, eine einzige Schicht 13 aufweisende Membran 4′ weist einen vernetzten Bereich 14 auf, der beispielsweise mittels Elektronenstrahlen hergestellt sein kann. Der vernetzte Bereich 14 ist auf der Seite der Kühlflüssigkeit angebracht und erhöht die Dichtigkeit der Membran 4′. Die in Fig. 7 dargestellte Membran 4˝ besteht ebenfalls aus einer einzigen Schicht 15, welche auf der Seite der Kühlflüssigkeit mit einer Lackschicht 16 versehen ist, die dafür sorgt, daß die Membran in jedem Falle dicht ist. Diese Schicht 15 besteht vorzugsweise aus einem Polymer, z.B. aus einem Thermoplast oder einem Elastomer.

Die in Fig. 8 gezeigte Membran 4‴ besteht ebenfalls aus einer einzigen Schicht 17. Um hier die notwendige Dichtigkeit zu gewährleisten, besteht die Schicht 17 aus einem weichgemachten Polymer. Die Schichten 13, 15 und 17 können z.B. aus EPDM-Kautschuk hergestellt sein (EPDM = Ethylen-Propylen-Terpolymer).

## Patentansprüche

1. Druckspeichertank zum Einspeisen einer Kühlflüssigkeit in einen Kernreaktor im Notkühlfall, mit den folgenden Merkmalen:
a) Der Speichertank weist eine - vorzugsweise obere - Einstiegsöffnung (1) und einen - vorzugsweise unteren - steuerbaren Auslaß (6) für die Kühlflüssigkeit auf;
b) durch eine im Inneren des Speichertanks angeordnete deformierbare Membrane (4) sind ein mit Treibgas füllbarer Raum (9) und ein Raum (8) zur Speicherung von Kühlflüssigkeit hermetisch voneinander getrennt,
**dadurch gekennzeichnet,**
c1) daß die Membrane (4) als Faltenbalg-Membrane ausgebildet ist und bis zur praktisch vollständigen Abgabe der Kühlflüssigkeit dehnbar bzw. zum Wiederauffüllen des Raums (8) mit Kühlflüssigkeit komprimierbar sowie mit dem Rand des einen Endes so befestigt ist, daß der Faltenbalg (18) zur Tankwandung (2) Spiel hat, und
c2) daß die Faltenbalg-Membrane (4) an ihrem freien Ende eine Kalotte (20) aufweist, mit einer solchen Verformbarkeit, daß die Faltenbalg-Membrane (4) einschließlich ihrer Kalotte (20) zwecks Einbaus durch die Einstiegsöffnung (1) einführbar ist.

2. Speichertank nach Anspruch 1,
**dadurch gekennzeichnet,** daß der Rand der Membran (4) mittels einer Befestigungsvorrichtung (3) an der Innenseite der Tankwandung (2) befestigt ist.

3. Speichertank nach Anspruch 1,
**dadurch gekennzeichnet,** daß die Membran (4) im Bereich einer achsnormalen Teilfuge des Speichertanks zwischen zwei umlaufenden, an je einem trennbaren Teil des Speichertanks angebrachten Flanschen (30, 31) eingeklemmt ist.

4. Speichertank nach einem der Ansprüche 1 bis 3,
**gekennzeichnet durch** eine solche Anzahl der Falten, daß bei entfaltetem Faltenbalg (18) der Speichertank praktisch vollständig entspeichert ist und die Membran-Kalotte den Auslaß (6) unter dichtender Anlage an dessen Randbereich gasdicht verschließt.

5. Speichertank nach Anspruch 4,
**dadurch gekennzeichnet,** daß die Wölbung der die Auslaßöffnung (6) aufweisenden Bodenkalotte des Speichertanks und die Form der Membran-Kalotte (20) aneinander angepaßt sind.

6. Speichertank nach Anspruch 2,
**dadurch gekennzeichnet,** daß die Befestigungsvorrichtung (3) einen an der Innenseite der Tankwandung (2) befestigten Distanzring (27) zur Distanzierung der Membran (4) von der Tankwandung (2) und einen an diesen festgeschraubten Befestigungsring (28) kleineren Durchmessers aufweist, wobei die Membran (4) zwischen dem Distanzring (27) und dem Befestigungsring (28) gas- und flüssigkeitsdicht eingeklemmt ist.

7. Speichertank nach einem der Ansprüche 1 bis 6, **dadurch gekennzeichnet,** daß im Auslaß (6) bzw. in einer entsprechenden Auslaßleitung ein Rückschlagventil (5) angeordnet ist, welches eine Rückströmung in den Speichertank verhindert.

8. Speichertank nach Anspruch 7,
**dadurch gekennzeichnet,** daß das Rückschlagventil (5) absperrbar ist.

9. Speichertank nach Anspruch 1,
**dadurch gekennzeichnet,** daß die Membrane (4) mehrschichtig ist, wobei die Schichten (10, 12) haftend verbunden oder lose sind.

10. Speichertank nach Anspruch 9,
**dadurch gekennzeichnet,** daß die Schichten (10, 12) der Membrane (4) aus verschiedenen Polymeren, z.B. Thermoplasten und Elastomeren, bestehen.

11. Speichertank nach Anspruch 10,
**dadurch gekennzeichnet,** daß die an den Treibgasraum (9) angrenzende Schicht (10) aus einem bei tiefen Temperaturen flexiblen Kautschuk, z.B. Silikon- oder Fluorkautschuk, und die an den Kühlflüssigkeitsraum (8) angrenzende Schicht (12) aus einem gasdichten Kautschuk, z.B. EPDM- oder Butylkautschuk, besteht.

12. Speichertank nach Anspruch 1,
**dadurch gekennzeichnet,** daß die Membrane (4') einschichtig ist und ihr an die Kühlflüssigkeit angrenzender Bereich durch chemische bzw. physikalische Behandlung, z.B. Vernetzung, eines eingebauten Weichmachers in seiner Gasdichtigkeit erhöht ist.

13. Speichertank nach Anspruch 1,
**dadurch gekennzeichnet,** daß die Membran (4") einschichtig ist und aus einem Polymer, z.B. einem Thermoplast oder einem Elastomer, besteht.

14. Speichertank nach einem der Ansprüche 9 bis 13,
**dadurch gekennzeichnet,** daß die Membran (4") auf der Seite der Kühlflüssigkeit lackiert ist.

15. Speichertank nach einem der Ansprüche 12 bis 14,
**dadurch gekennzeichnet,** daß die einschichtige Membrane (4'") aus einem weichgemachten Polymer besteht.

## Claims

1. Pressurized storage tank for feeding a cooling fluid into a nuclear reactor in the event of emergency cooling, having the following features:
a) the storage tank has a - preferably upper - entry opening (1) and a - preferably lower - controllable outlet (6) for the cooling fluid;
b) by means of a deformable diaphragm (4) arranged in the interior of the storage tank, a chamber (9) which can be filled with propellent gas and a chamber (8) for storing cooling fluid are separated from one another hermetically,
characterized in that
c1) the diaphragm (4) is constructed as a bellows diaphragm and is sufficiently flexible to practically completely deliver the cooling fluid and can be compressed for refilling the chamber (8) with cooling fluid and is fastened to the edge of the one end in such a way that the bellows (18) have clearance to the tank wall (2), and
c2) the bellows diaphragm (4) has a cup (20) at its free end, having such a deformability that the bellows diaphragm (4) including its cup (20) can be inserted through the entry opening (1) for the purpose of installation.

2. Storage tank according to claim 1, characterized in that the edge of the diaphragm (4) is fastened by means of a fastening device (3) to the inner side of the tank wall (2).

3. Storage tank according to claim 1, characterized in that the diaphragm (4) is clamped in the region of an axis-normal joint of the storage tank between two circulating flanges (30, 31) fitted to a separable part of the storage tank in each case.

4. Storage tank according to one of claims 1 to 3, characterized by such a number of folds that with unfolded bellows (18) the storage tank is unloaded practically completely and the diaphragm cup closes the outlet (6) in gas-tight manner with sealing contact at its edge region.

5. Storage tank according to claim 4, characterized in that the curvature of the floor cup of the storage tank having the outlet opening (6) and the form of the diaphragm cup (20) are adapted to one another.

6. Storage tank according to claim 2, characterized in that the fastening device (3) has a separating ring (27) fastened to the inner side of the tank wall (2) for separating the diaphragm (4) from the tank wall (2) and a fastening ring (28) of smaller diameter screwed thereon, with the diaphragm (4) being clamped in gas-tight and liquid-sealed manner between the separating ring (27) and the fastening ring (28).

7. Storage tank according to one of claims 1 to 6, characterized in that in the outlet (6) or in an appropriate outlet line a nonreturn valve (5) is arranged, which prevents a return current into the storage tank.

8. Storage tank according to claim 7, characterized in that the nonreturn valve (5) can be shut off.

9. Storage tank according to claim 1, characterized in that the diaphragm (4) is multilayered, with the layers (10, 12) being adhesively connected or loose.

10. Storage tank according to claim 9, characterized in that the layers (10, 12) of the diaphragm (4) consist of various polymers, for example thermoplastics and elastomers.

11. Storage tank according to claim 10, characterized in that the layer (10) adjoining the propellent-gas chamber (9) consists of rubber which is flexible at low temperatures, for example silicon rubber or fluorine rubber, and the layer (12) adjoining the cooling-fluid chamber (8) consists of gas-tight rubber, for example EPDM rubber or butyl rubber.

12. Storage tank according to claim 1, characterized in that the diaphragm (4') is of a single layer and the gas-impermeability of its region adjoining the cooling fluid is increased through chemical or physical treatment, for example cross-linking, of an installed softener.

13. Storage tank according to claim 1, characterized in that the diaphragm (4") is of a single layer and consists of a polymer, for example a thermoplastic or an elastomer.

14. Storage tank according to one of claims 9 to 13, characterized in that the diaphragm (4") is lacquered on the side of the cooling fluid.

15. Storage tank according to one of claims 12 to 14, characterized in that the one-layered diaphragm (4'") consists of a softened polymer.

## Revendications

1. Réservoir sous pression d'injection de liquide de refroidissement dans un réacteur nucléaire en cas d'urgence, Comportant les caractéristiques suivantes :
a) le réservoir comporte une ouverture (1) - de préférence supérieure - d'entrée et une sortie (6) - de préférence inférieure - qui peut être commandée et qui est destinée au liquide de refroidissement;
b) une chambre (9) qui peut être emplie d'un gaz propulseur et une chambre (8) de stockage du liquide de refroidissement sont séparées hermétiquement l'une de l'autre par une membrane (4) déformable disposée à l'intérieur de la cuve,
caractérisé
c1) en ce que la membrane (4) est constituée en membrane à soufflet à plis et peut se dilater jusqu'à expulsion pratiquement complète du liquide de refroidissement ou, pour remplir à nouveau la chambre (8) de liquide de refroidissement, peut être comprimée, tout en étant fixée par le bord de l'une des extrémités de façon que le soufflet à plis (18) ait du jeu par rapport à la paroi du réservoir (2) et
c2) en ce que la membrane (4) à soufflet comporte, à son extrémité libre, une calotte (20) ayant une aptitude à se déformer telle que la membrane (4) à soufflet à plis, y compris sa calotte (20), puisse être introduite, en vue du montage, par l'ouverture (1) d'entrée.

2. Réservoir suivant la revendication 1, caractérisé en ce que le bord de la membrane (4) est fixé à la face intérieure de la paroi du réservoir (2) au moyen d'un dispositif de fixation (3).

3. Réservoir suivant la revendication 1, caractérisé en ce que la membrane (4) est serrée dans la région d'un joint normal à l'axe du réservoir, entre deux brides (30, 31) faisant tout le tour et ménagées respectivement sur une partie séparable du réservoir.

4. Réservoir suivant l'une des revendications 1 à 3, caractérisé par un nombre de plis tel que, lorsque le soufflet à plis (18) est déplié, le réservoir est pratiquement vidé entièrement et la calotte de la membrane ferme de manière étanche au gaz la sortie (6) en s'appliquant de manière étanche sur la partie marginale de celle-ci.

5. Réservoir suivant la revendication 4, caractérisé en ce que la courbure de la calotte de fond du réservoir qui comporte l'ouverture de sortie (6) et la forme de la calotte (20) de la membrane sont adaptées l'une à l'autre.

6. Réservoir suivant la revendication 2, caractérisé en ce que le dispositif de fixation (3) comporte un anneau d'entretoisement (27) fixé à la face intérieure de la paroi du réservoir (2) pour maintenir la membrane (4) à distance de la paroi du réservoir (2) et un anneau de fixation (28) vissé de diamètre plus petit, la membrane (4) étant serrée d'une manière étanche au gaz et au liquide, entre l'anneau d'entretoisement (27) et l'anneau de fixation (28).

7. Réservoir suivant l'une des revendications 1 à 6, caractérisé en ce que dans la sortie (6) ou dans un conduit de sortie correspondant, est monté un clapet antiretour (5) qui empêche tout écoulement en retour dans le réservoir.

8. Réservoir suivant la revendication 7' caractérisé en ce que le clapet antiretour (5) peut être fermé.

9. Réservoir suivant la revendication 1, caractérisé en ce que la membrane (4) est à plusieurs couches, les couches (10,12) étant reliées de manière adhérente ou libres.

10. Réservoir suivant la revendication 9, caractérisé en ce que les couches (10,12) de la membrane (4) sont en divers polymères, par exemple en matière thermoplastique et en élastomère.

11. Réservoir suivant la revendication 10, caractérisé en ce que la couche (10) délimitant la chambre (9) réservée au gaz propulseur est en un caoutchouc souple à température basse, par exemple en caoutchouc silicone ou en caoutchouc fluoré, et la couche (12) délimitant la chambre (8) réservée au liquide de refroidissement est en un caoutchouc étanche au gaz, par exemple en caoutchouc EPDM ou en caoutchouc butyle.

12. Réservoir suivant la revendication 1, caractérisé en ce que la membrane (4') est d'une seule couche et sa partie adjacente au liquide de refroidissement a son étanchéité au gaz renforcée par un traitement chimique ou physique, par exemple par réticulation d'un plastifiant qui y est incorporé.

13. Réservoir suivant la revendication 1, caractérisé en ce que la membrane (4") est à une seule couche et est en un polymère, par exemple en une matière thermoplastique ou en élastomère.

14. Réservoir suivant l'une des revendications 9 à 13, caractérisé en ce que la membrane (4") est vernie du côté du liquide de refroidissement.

15. Réservoir suivant l'une des revendications 12 à 14, caractérisé en ce que la membrane (4"') en une seule couche est en un polymère plastifié.
